# FASCICULE DE BREVET EUROPEEN

(11) **EP 3 658 516 B1**
(45) Date de publication et mention de la délivrance du brevet: **07.04.2021**
(21) Numéro de dépôt: 18773526.1
(22) Date de dépôt: 24.07.2018
(51) Int. Cl.: C03C 3/089, C03C 13/06

(54) **FIBRES MINERALES**
MINERALFASERN
MINERAL FIBRES

(30) Priorité: 25.07.2017 FR 1757027
(43) Date de publication de la demande: 03.06.2020
(73) Titulaire: SAINT-GOBAIN ISOVER, 92400 Courbevoie (FR)
(72) Inventeur: CLAIREAUX, Corinne, 75019 Paris (FR); BERNARD, Jean-Luc, 60600 Breuil Le Vert (FR)
(74) Mandataire: Saint-Gobain Recherche
(86) Numéro de dépôt international: PCT/FR2018/051890
(87) Numéro de publication internationale: WO 2019/020925

(56) Documents cités:
- CN-A- 1 544 370
- US-A1- 2002 032 116

## Description

La présente invention concerne le domaine des fibres minérales artificielles. Elle vise plus particulièrement les fibres minérales destinées à fabriquer des matériaux d'isolation thermique. Elle s'intéresse notamment aux fibres minérales vitreuses pour des applications de protection contre le feu.

La résistance au feu d'un élément de construction correspond à la durée pendant laquelle l'élément conserve sa fonction portante, garantit l'étanchéité aux flammes et conserve son rôle d'isolant thermique. Le test incendie standard consiste généralement en une montée en température suivant la norme ISO 834, basée sur la courbe des températures d'un feu cellulosique. Or, cette courbe n'est pas représentative des incendies mettant enjeu des hydrocarbures. Pour simuler les incendies liés à des produits pétroliers comme ceux pouvant se dérouler sur des plates-formes off-shore, dans l'industrie pétrochimique ou dans des tunnels routiers, c'est la courbe hydrocarbure décrite dans la norme EN 1363-1 qui est appliquée. Elle diffère de la courbe cellulosique par une augmentation de température beaucoup plus brutale, et une température finale plus élevée.

US 2002/032116 décrit l'utilisation de B₂O₃ et P₂O₅ pour améliorer le caractère réfractaire de fibres salines. CN 1544370 décrit des fibres biosolubles comprenant notamment 1 à 2 % en poids de B₂O₃.

L'objectif la présente invention consiste donc à proposer une composition de fibres minérales vitreuses basée sur le système quaternaire SiO₂-CaO-MgO-B₂O₃, avec une tenue au feu améliorée.

Cette composition doit également pouvoir être fibrée par les procédés traditionnellement utilisés, tel que les procédés Sillan ou de de fibrage sur rotors. Le déroulement du fibrage par ces procédés est optimal lorsque la matière fondue a une viscosité de 1,5 poises. D'autre part, la température de fibrage idéale, à laquelle cette viscosité doit être atteinte (T_{fib}≈T_{log1,5}), est entre 1320 et 1420°C. La température n'étant pas parfaitement constante dans le temps ni parfaitement homogène lors du fibrage, un écart suffisant est nécessaire entre la température de fibrage (T_{fib}) et la température du liquidus (T_{liq}) pour éviter tout problème de dévitrification lors du fibrage. Cet écart, appelé plage de fibrage, doit être d'au moins 30°C.

Par ailleurs, le caractère biosoluble est, comme pour toutes fibres minérales artificielles, un critère important pour les fibres minérales selon l'invention. Les fibres minérales doivent pouvoir se dissoudre rapidement dans un milieu physiologique afin de prévenir tout risque pathogène potentiel lié à l'accumulation éventuelle des fibres les plus fines dans l'organisme par inhalation. A cet effet, la composition selon l'invention doit notamment satisfaire un Karcinogenicity Index (KI), défini dans la règle technique TRGS 905, supérieur ou égal à 40.

Ainsi, la présente invention concerne des fibres minérales présentant une composition chimique comprenant les constituants suivants, en pourcentages pondéraux :

| | |
|---|---|
| SiO₂ | 57,0 à 60,0 % |
| CaO | 25,0 à 30,0 % |
| MgO | >8,0 à 10,0 % |
| B₂O₃ | 2,5 à 6,0 % |
| R₂O (Na₂O+K₂O) | jusqu'à 2,5 % |
| Al₂O₃ | 0 à 2,0 %. |

et un rapport molaire R₂O/B₂O₃ de 0,20 à 0,60.

Dans l'intégralité du présent texte, les teneurs sont exprimées en pourcentages pondéraux, sauf indication contraire.

De telles compostions permettent de satisfaire à la fois les critères de biosolubilité, de résistance au feu améliorée (notamment au feu d'hydrocarbures) et de processabilité (T_{fib}≈T_{log1,5} entre 1320 et 1420°C et T_{fib}-T_{liq} supérieure à 30°C) recherchés. Ces propriétés ont notamment pu être obtenues grâce à la combinaison d'une teneur en magnésie relativement élevée (supérieur à 8,0 %), de la présence de d'oxyde de bore et d'un rapport molaire R₂O/B₂O₃ bien déterminé.

Les fibres minérales selon l'invention sont des fibres vitreuse, c'est-à-dire qu'elles présentent une phase vitreuse majoritaire (au mois 50%), en général à plus de 90% voire à plus de 99% en poids, ou même à 100%, contrairement aux fibres céramiques qui sont cristallisées. La proportion de phases vitreuse et cristalline dans les fibres minérales peut être déterminée par diffractométrie de rayons X (DRX).

Les compositions de fibres minérales selon l'invention sont basées sur le système quaternaire SiO₂-CaO-MgO-B₂O₃, c'est-à-dire que la somme des teneurs en SiO₂, CaO, MgO et B₂O₃ représente au moins 92 %, notamment au moins 95 %, de la composition. De préférence, la somme des teneurs en SiO₂, CaO, MgO, B₂O₃ et R₂O représente au moins 95 %, notamment au moins 97 %, voire au moins 98 % de la composition de fibres minérales.

La teneur en silice (SiO₂) est comprise dans un domaine allant de 57,0 à 60,0 %, notamment de 57,5 à 59,5 %. Une teneur supérieure à 60,0 % peut diminuer la biosolubilité des fibres minérales. Une teneur inférieur à 57,0 % peut affecter défavorablement la viscosité de la composition aux températures de fibrage.

La teneur en chaux (CaO) est comprise dans un domaine allant de 25,0 à 30,0 %, notamment de 26,0 à 29,0 %. Des teneurs inférieures à 25,0 % peuvent augmenter la température du liquidus.

La teneur en magnésie (MgO) est comprise dans un domaine allant de supérieur à 8,0 à 10,0 %, notamment de 8,1 %, voire 8,3 % ou 8,5 %, à 10,0 %, voire 9,5 % ou 9,3 % . Des teneurs inférieures ou égales à 8,0 % peuvent augmenter la température de liquidus.

La teneur en oxyde de bore (B₂O₃) est de 2,5 à 6,0 %, notamment de 2,5 %, voire 3,0 %, à 5,0 %, voire 4,5 %. Des teneurs inférieures à 2,0 % peuvent diminuer la résistance au feu des fibres. Au-dessus de 6,0 % la viscosité aux températures de fibrage peut être diminuée.

Le rapport molaire CaO/(CaO+B₂O₃) est de préférence de 0,75 à 0,95, notamment de 0,78 à 0,91, afin d'abaisser la température du liquidus et d'élargir encore la plage de fibrage.

La teneur totale en oxydes alcalins (R₂O), notamment soude (Na₂O) et potasse (K₂O), est dans un domaine allant jusqu'à 2,5 %. La teneur en Na₂O est avantageusement de 0,1 à 2,0 %. La teneur en K₂O est quant à elle avantageusement d'au plus 1,0, voire 0,5 %. La laine minérale ne comprend de préférence pas d'autre oxyde alcalin que Na₂O et K₂O. Elle peut néanmoins contenir de faibles quantités de Li₂O, parfois présent en tant qu'impuretés dans certaines matières premières.

Le rapport molaire R₂O/B₂O₃ est de 0,20 à 0,60, de préférence de 0,23 à 0,54. Sans vouloir être lié à une quelconque théorie, il est supposé que, dans le domaine de compositions selon l'invention, le bore agit principalement comme formateur de réseau lorsque le rapport molaire R₂O/B₂O₃ est de 0,20 à 0,60. Cela a pour effet d'augmenter la viscosité aux températures de fibrage des compositions selon l'invention tout en conservant une teneur en oxyde de bore significative qui améliore la résistance au feu.

La teneur en alumine (Al₂O₃) est inférieure ou égale à 2,0 %, notamment inférieure ou égale à 1,5 %, par exemple de 0 %, voire 0,1 %, à 1,0 %, voire 0,7 %. Des teneurs supérieures à 2,0 % peuvent affecter la biosolubilité des fibres.

La composition de fibres minérales selon l'invention peut également contenir du P₂O₅, notamment à des teneurs pouvant aller jusqu'à 3 %, voire jusqu'à 1,2 %, pour augmenter la biosolubilité à pH neutre.

La composition selon l'invention peut également comprendre d'autres éléments présents notamment en tant qu'impuretés inévitables. Elle peut comprendre de l'oxyde de titane (TiO₂) à des teneurs comprises dans un domaine allant jusqu'à 3 %, notamment de 0,1 à 2,0 %, voire 1,0%. De même, l'oxyde de fer (exprimée sous la forme Fe₂O₃) peut être présent à des teneurs comprises dans un domaine allant jusqu'à 3 %, notamment de 0,1 à 2,0 %, voire 1,0%.

Il va de soi que les différentes plages préférées décrites ci-avant peuvent être combinées librement les unes avec les autres, les différentes combinaisons ne pouvant toutes êtres énumérées par soucis de concision.

Quelques combinaisons préférées sont décrites ci-après.

Selon un mode de réalisation préféré, les fibres minérales selon l'invention présentent une composition chimique comprenant les constituants suivants, en pourcentages pondéraux :

| | |
|---|---|
| SiO₂ | 57,5 à 59,5 %, |
| CaO | 26,0 à 29,0 %, |
| MgO | 8,1 à 9,5 %, |
| B₂O₃ | 2,5 à 5,0 %, |
| R₂O | jusqu'à 2,5 % |
| Al₂O₃ | 0 à 2,0 %, |

un rapport molaire R₂O/B₂O₃ de 0,20 à 0,60, notamment de 0,23 à 0,54, et
un rapport molaire CaO/(CaO+B₂O₃) de 0,75 à 0,95, notamment de 0,78 à 0,91.

L'invention a également pour objet un procédé d'obtention de fibres minérales selon l'invention, comprenant une étape de fusion d'un mélange vitrifiable possédant sensiblement la même composition chimique que celle desdites fibres minérales ; puis une étape de fibrage, notamment par un procédé Sillan ou de fibrage sur rotors.

L'étape de fusion permet d'obtenir un bain de matière fondue à partir d'un mélange vitrifiable. Le mélange vitrifiable comprend diverses matières premières naturelles et/ou artificielles, par exemple du sable de silice, de la phonolithe, de la dolomie, du carbonate de sodium etc...

L'étape de fusion peut être réalisée de différentes manières connues, notamment par fusion dans un four à flammes ou par fusion électrique.

Le four à flammes comprend au moins un brûleur, aérien (les flammes sont disposées au-dessus du bain de matière fondue et le chauffent par rayonnement) ou immergé (les flammes sont créées directement au sein du bain de matière fondue). Le ou chaque brûleur peut être alimenté par divers combustibles tels que le gaz naturel ou le fioul.

Par « fusion électrique », on entend que le mélange vitrifiable est fondu par effet Joule, au moyen d'électrodes immergées dans le bain de matière fondue, à l'exclusion de toute utilisation d'autres moyens de chauffage, tels que des flammes. Le mélange vitrifiable est normalement réparti de manière homogène sur la surface du bain de matière fondue à l'aide d'un dispositif mécanique, et constitue ainsi un écran thermique limitant la température au-dessus du bain de matière fondue, si bien que la présence d'une superstructure n'est pas toujours nécessaire. Les électrodes peuvent être suspendues de manière à plonger dans le bain de matière fondue par le dessus, être installées dans la sole, ou encore être installées dans les parois latérales de la cuve. Les deux premières options sont généralement préférées pour les cuves de grandes dimensions afin de répartir au mieux le chauffage du bain de matière fondue. Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

L'étape de fusion peut également mettre en œuvre à la fois une fusion flammes et une fusion électrique, par exemple en employant un four à flammes également muni d'électrodes en parois latérales servant à accélérer la fusion du mélange vitrifiable.

L'étape de fibrage est de préférence réalisée par les procédés Sillan ou de fibrage sur rotors. Le procédé Sillan, appelé « blast drawing method » en anglais et décrit par exemple dans CA 1281188, consiste à amener la matière fondue à travers une ou plusieurs buses pour former un filament primaire. Les filaments primaires sont ensuite atténués à l'aide d'un flux de gaz à haute vitesse pour obtenir les fibres minérales.

Le procédé de fibrage sur rotors, aussi appelé fibrage en cascade et décrit par exemple dans WO 92/06047, consiste à verser la matière fondue sur un ensemble de rotors montés en rotation autour d'axes différents sensiblement horizontaux. Les rotors sont agencés de telle sorte que, lorsqu'ils sont en rotation, la matière fondue versée sur la périphérie du rotor supérieur de l'ensemble de rotors est projetée sur la périphérie du rotor suivant, puis successivement sur la périphérie de chaque rotor suivant. Les fibres minérales sont projetées par force centrifuge depuis le ou chaque rotor et collectées.

Les fibres obtenues peuvent être liées entre elles à l'aide d'une composition d'encollage pulvérisée à leur surface, avant d'être réceptionnées et mises en forme pour donner divers produits de laine minérales, comme des rouleaux ou des panneaux. Les produits de laine minérale ainsi liés comprennent de préférence au plus 10% en poids sec de liant par rapport au total du poids du liant et des fibres minérales.

Afin d'obtenir une résistance thermique encore meilleure, la laine minérale comprend avantageusement un composé du phosphore, de préférence pulvérisé en même temps que la composition d'encollage. Le composé du phosphore peut être minéral, tel que décrit dans la demande WO 01/68546 ou en partie organique, par exemple un oligomère ou polymère du type polyacide ou polyester phosphonique ou phosphorique, comme enseigné par la demande WO 2006/103375.

L'invention a également pour objet un produit d'isolation thermique comprenant des fibres minérales selon l'invention. Un tel produit se présente notamment sous la forme de rouleaux ou de panneaux. Il peut être employé par exemple dans des bâtiments, dans l'industrie ou dans des moyens de transport, notamment ferroviaire ou maritime. Il est particulièrement adapté à des applications dans lesquelles il peut être amené à subir des températures élevées, soit en continu (isolation de fours ou étuves domestiques ou industriels, de conduites de transport de fluides) soit de manière accidentelle, dans un rôle de protection contre le feu (portes anti-feu, isolation de navires, de tunnels ou de plateformes off-shore...). Plus généralement, le produit selon l'invention peut être employé pour isoler thermiquement tout type de bâtiments, tertiaires ou d'habitation (collective ou individuelle). Il peut par exemple être utilisé dans des systèmes d'isolation par l'extérieur, pour l'isolation de maisons à ossature bois, dans des panneaux sandwichs, dans des conduits de ventilation etc...

Les exemples qui suivent illustrent l'invention de manière non-limitative.

Des exemples de verres (exemple 1 selon l'invention et exemples comparatifs 2 à 5) dont les compositions pondérales sont présentées dans le tableau 1 ont été élaborés.

La plage de fibrage correspond à la différence entre la température de fibrage, à laquelle la composition doit présenter une viscosité d'environ 1,5 poises, et la température de liquidus (T_{fib}-T_{liq}≈ T_{log1,5}-T_{liq}).

L'affaissement est déterminé par analyse thermomécanique. Les verres obtenus sont réduits en poudre verre dont la granulométrie est inférieure à 40 µm. Chaque poudre de verre est compactée sous la forme de pastilles cylindriques de 5 mm de diamètre et d'une hauteur d'environ 1 cm et de densité égale à 64% de celle du verre. L'affaissement, exprimé en pourcentage, correspond à la variation de la hauteur d'une pastille de poudre de verre soumise à une rampe de 10 K/min de la température ambiante jusqu'à 1100°C par rapport à la hauteur initiale de la pastille. La mesure de hauteur de l'échantillon se fait à l'aide d'un palpeur posé au sommet du cylindre. Les tests de répétabilités permettent de définir une déviation standard inférieure à 1%.

| | | | | | |
|---|---|---|---|---|---|
| Verre | 1 | 2 | 3 | 4 | 5 |
| SiO₂ | 58,8 | 58,8 | 58,6 | 58,2 | 56,8 |
| CaO | 27,4 | 27,3 | 27,4 | 30,0 | 29,3 |
| MgO | 8,9 | 8,9 | 8,9 | 5,9 | 7,8 |
| B₂O₃ | 3,7 | 2,9 | 4,9 | 4,9 | 5,0 |
| Na₂O | 0,9 | 1,9 | 0 | 0,9 | 0,5 |
| Na₂O/ B₂O₃ | 0,27 | 0,71 | 0 | 0,22 | 0,11 |
| T_{log1,5} (°C) | 1326 | n.m. | 1332 | 1302 | 1275 |
| Plage de fibrage (°C) | >30 | - | 12 | 12 | >30 |
| Affaissement (%) | <5 | 11 | <5 | <5 | <5 |

| | | | | | |
|---|---|---|---|---|---|
| n.m. : non mesurable | | | | | |

La composition de l'exemple 1 selon l'invention présente à la fois un faible affaissement, indiquant une bonne résistance au feu, ainsi qu'une température T_{log1,5} entre 1320 et 1420°C et une plage de fibrage supérieure à 30°C, ce qui permet un fibrage dans cette gamme de température sans risque de dévitrification. Au contraire, les compositions des exemples comparatifs 2 à 5 ne permettent pas de satisfaire à l'ensemble de ces critères.

## Revendications

1. Fibres minérales présentant une composition chimique comprenant les constituants suivants, en pourcentages pondéraux :
| | |
|---|---|
| SiO₂ | 57,0 à 60,0 %, |
| CaO | 25,0 à 30,0 %, |
| MgO | >8,0 à 10,0 %, |
| B₂O₃ | 2,5 à 6,0 %, |
| R₂O (Na₂O+K₂O) | jusqu'à 2,5 % |
| Al₂O₃ | 0 à 2,0 %, |
et un rapport molaire R₂O/B₂O₃ de 0,20 à 0,60.

2. Fibres minérales selon la revendication 1, **caractérisées en ce que** le rapport molaire R₂O/B₂O₃ est de 0,23 à 0,54.

3. Fibres minérales selon l'une quelconque des revendications 1 ou 2, **caractérisées en ce que** le rapport molaire CaO/(CaO+B2O3) est de 0,75 à 0,95, de préférence de 0,78 à 0,91.

4. Fibres minérales selon l'une quelconque des revendications 1 à 3, **caractérisées en ce que** la somme des teneurs en SiO₂ + CaO + MgO + B₂O₃ + R₂O représente au moins 95 %, de préférence au moins 97 %, plus préférentiellement au moins 98 % en poids de la composition chimique desdites fibres minérales.

5. Fibres minérales selon l'une quelconque des revendications 1 à 4, **caractérisées en ce que** lesdites fibres minérales comprennent une teneur en MgO de 8,1 à 9,5 %, de préférence de 8,3 à 9,3 %.

6. Fibres minérales selon l'une quelconque des revendications 1 à 5, **caractérisées en ce que** lesdites fibres minérales comprennent une teneur en B₂O₃ de 2,5 à 5,0 %, de préférence de 3,0 à 4,5 %.

7. Fibres minérales selon l'une quelconque des revendications 1 à 5, **caractérisées en ce que** lesdites fibres minérales comprennent une teneur en Na₂O de 0,1 à 2,0 %.

8. Fibres minérales selon l'une quelconque des revendications 1 à 5, **caractérisées en ce que** lesdites fibres minérales comprennent une teneur en K₂O d'au plus 1,0 %, de préférence d'au plus 0,5 %.

9. Procédé de fabrication de fibres minérales telles que définies à l'une des revendications 1 à 8, comprenant une étape de fusion d'un mélange vitrifiable adapté à la composition chimique desdites fibres minérales ; puis une étape de fibrage.

10. Produit d'isolation thermique comprenant des fibres minérales telles que définies aux revendications 1 à 8.

## Patentansprüche

1. Mineralfasern mit einer chemischen Zusammensetzung, umfassend die folgenden Bestandteile in Gewichtsprozent:
| | |
|---|---|
| SiO₂ | 57,0 bis 60,0 %, |
| CaO | 25,0 bis 30,0 %, |
| MgO | > 8,0 bis 10,0 %, |
| B₂O₃ | 2,5 bis 6,0 %, |
| R₂O (Na₂O + K₂O) | bis 2,5 % |
| Al₂O₃ | 0 bis 2,0 %, |
und ein R₂O/B₂O₃-Molverhältnis von 0,20 bis 0,60.

2. Mineralfasern nach Anspruch 1, **dadurch gekennzeichnet, dass** das R₂O/B₂O₃-Molverhältnis 0,23 bis 0,54 beträgt.

3. Mineralfasern nach einem der Ansprüche 1 oder 2, **dadurch gekennzeichnet, dass** das CaO/(CaO+B₂O₃)-Molverhältnis 0,75 bis 0,95, vorzugsweise 0,78 bis 0,91, beträgt.

4. Mineralfasern nach einem der Ansprüche 1 bis 3, **dadurch gekennzeichnet, dass** die Summe der Gehalte an SiO₂ + CaO + MgO + B₂O₃ + R₂O mindestens 95 Gew.-%, vorzugsweise mindestens 97 Gew.-%, mehr bevorzugt mindestens 98 Gew.-%, der chemischen Zusammensetzung der Mineralfasern beträgt.

5. Mineralfasern nach einem der Ansprüche 1 bis 4, **dadurch gekennzeichnet, dass** die Mineralfasern einen Gehalt an MgO von 8,1 bis 9,5 %, vorzugsweise von 8,3 bis 9,3 %, umfassen.

6. Mineralfasern nach einem der Ansprüche 1 bis 5, **dadurch gekennzeichnet, dass** die Mineralfasern einen Gehalt an B₂O₃ von 2,5 bis 5,0 %, vorzugsweise von 3,0 bis 4,5 %, umfassen.

7. Mineralfasern nach einem der Ansprüche 1 bis 5, **dadurch gekennzeichnet, dass** die Mineralfasern einen Gehalt an Na₂O von 0,1 bis 2,0 % umfassen.

8. Mineralfasern nach einem der Ansprüche 1 bis 5, **dadurch gekennzeichnet, dass** die Mineralfasern einen Gehalt an K₂O von höchstens 1,0 %, vorzugsweise höchstens 0,5 %, umfassen.

9. Verfahren zur Herstellung von Mineralfasern wie in einem der Ansprüche 1 bis 8 definiert, umfassend einen Schmelzschritt einer verglasbaren Mischung, angepasst an die chemische Zusammensetzung der Mineralfasern; anschließend einen Faserbildungsschritt.

10. Wärmedämmprodukt, umfassend Mineralfasern wie in Ansprüchen 1 bis 8 definiert.

## Claims

1. Mineral fibers exhibiting a chemical composition comprising the following constituents, as percentages by weight:
| | |
|---|---|
| SiO₂ | 57.0 to 60.0% , |
| CaO | 25.0 to 30.0%, |
| MgO | > 8.0 to 10.0%, |
| B₂O₃ | 2.5 to 6.0%, |
| R₂O (Na₂O+K₂O) | up to 2.5% |
| Al₂O₃ | 0 to 2.0%, |
and an R₂O/B₂O₃ molar ratio of 0.20 to 0.60.

2. The mineral fibers as claimed in claim 1, **characterized in that** the R₂O/B₂O₃ molar ratio is from 0.23 to 0.54.

3. The mineral fibers as claimed in either one of claims 1 and 2, **characterized in that** the CaO/(CaO + B₂O₃) molar ratio is from 0.75 to 0.95, preferably from 0.78 to 0.91.

4. The mineral fibers as claimed in any one of claims 1 to 3, **characterized in that** the sum of the contents of SiO₂ + CaO + MgO + B₂O₃ + R₂O represents at least 95%, preferably at least 97%, more preferably at least 98%, by weight, of the chemical composition of said mineral fibers.

5. The mineral fibers as claimed in any one of claims 1 to 4, **characterized in that** said mineral fibers comprise a content of MgO of 8.1 to 9.5%, preferably of 8.3 to 9.3%.

6. The mineral fibers as claimed in any one of claims 1 to 5, **characterized in that** said mineral fibers comprise a content of B₂O₃ of 2.5 to 5.0%, preferably of 3.0 to 4.5%.

7. The mineral fibers as claimed in any one of claims 1 to 5, **characterized in that** said mineral fibers comprise a content of Na₂O of 0.1 to 2.0%.

8. The mineral fibers as claimed in any one of claims 1 to 5, **characterized in that** said mineral fibers comprise a content of K₂O of at most 1.0%, preferably of at most 0.5%.

9. A process for the manufacture of mineral fibers as defined in one of claims 1 to 8, comprising a stage of melting a vitrifiable mixture suitable for to the chemical composition of said mineral fibers, and then a fiberizing stage.

10. A thermal insulation product comprising mineral fibers as defined in claims 1 to 8.
